(19) Europäisches Patentamt
European Patent Office
Office européen des brevets

(11) EP 0 559 045 B1

(12) **EUROPÄISCHE PATENTSCHRIFT**

(45) Veröffentlichungstag und Bekanntmachung des Hinweises auf die Patenterteilung:
**03.04.1996 Patentblatt 1996/14**

(51) Int Cl.[6]: **C08G 77/18**, C08G 77/08

(21) Anmeldenummer: **93102760.1**

(22) Anmeldetag: **22.02.1993**

(54) **Verfahren zur Herstellung von Organyloxy-endgestoppten Polysiloxanen**

Process for preparing polysiloxanes with organoxy end groups

Procédé de préparation de polysiloxanes ayant des groupes terminaux organoxy

(84) Benannte Vertragsstaaten:
**AT BE CH DE DK ES FR GB GR IE IT LI LU MC NL PT SE**

(30) Priorität: **06.03.1992 DE 4207212**

(43) Veröffentlichungstag der Anmeldung:
**08.09.1993 Patentblatt 1993/36**

(73) Patentinhaber: **BAYER AG**
**D-51368 Leverkusen (DE)**

(72) Erfinder:
- **Weber, Wilhelm, Dr.**
  **W-5090 Leverkusen 1 (DE)**
- **Sockel, Karl-Heinz**
  **W-5090 Leverkusen 1 (DE)**

(56) Entgegenhaltungen:
**EP-A- 0 382 365**
**EP-A- 0 457 693**
**EP-A- 0 468 239**
**FR-A- 1 575 067**
**FR-A- 2 663 941**

- **CHEMICAL ABSTRACTS, vol. 89, 1978, Columbus, Ohio, US; abstract no. 216304n, MOLCHANOV, B.V. ET AL. 'Alkoxysiloxanes' Seite 39 ;**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 559 045 B1

Printed by Jouve, 75001 PARIS (FR)

## Beschreibung

Triorganyloxysilyl- bzw. Organodiorganyloxysilyl-endgestoppte Poly(diorganosiloxane) härten in Gegenwart von Wasser, insbesondere Luftfeuchtigkeit, und Katalysatoren zu elastomeren Silikonen aus. Sie bilden daher den Grundstoff für bei Raumtemperatur vernetzende Einkomponenten-Dicht- und Formmassen (RTV 1 K-Massen).

Di- bzw. Triorganyloxysilyl-Poly(diorganosiloxane) werden üblicherweise durch Umsetzung von $\alpha,\omega$-Dihydroxypoly (diorganosiloxanen) mit Tetraorganyloxysilanen oder Triorganyloxysilanen in Gegenwart von basischen Katalysatoren bzw. Katalysatorsystemen hergestellt.

Solche Katalysatoren bzw. Katalysatorsysteme sind:

Amine (EP-A 21 859 und EP-A 69 256)
Hydroxylaminderivate (EP-A 70 786)
Amoniumcarbamate (DE-A 3 523 206)
Mischung aus Aminen und Carbonsäuren (EP-A 137 883).

Die genannten Katalysatorsysteme stellen Kompromisse dar, die eine Reihe von Nachteilen aufweisen. Sie erfordern lange Reaktionszeiten und/oder erhöhte Temperaturen. Überwiegend bedarf es substantieller Mengen des Katalysators, der nur schwer aus den Reaktionsmischungen wieder entfernt werden kann, so daß unerwünschte Modifizierungen des Produktes in Kauf genommen werden müssen.

Dem an sich wünschenswerten Einsatz von hochwirksamen Alkalihydroxiden, die sehr effizient im Hinblick auf die genannte Umsetzungsreaktion (Endstoppung) sind, steht entgegen, daß sie als unerwünschte Nebenreaktion Polymerumlagerungen bewirken. Diese können zur Kettenspaltung und letztlich zu verzweigten Polysiloxanen mit je einer Alkoxy-Gruppe an den endständigen Siliciumatomen führen. Solche Endgruppen sind aber wegen ihrer geringen Reaktionsfähigkeit für die Herstellung von RTV 1 K-Massen ungeeignet.

So hat es bereits Vorschläge gegeben, den Alkalihydroxyd-Katalysator nach Beendigung der Umsetzungsreaktion durch anschließende Zugabe von Säuren bzw. säurefreisetzenden Substanzen (EP-A 457 693, EP-A 468 239) zu neutralisieren, um die unerwünschte Nebenreaktion noch rechtzeitig zu stoppen. Solche Verfahrensführung stellt aber insbesondere bei der Umsetzung von technischen Mengen erhebliche Anforderungen, die technisch nur schwer beherrschbar sind.

Es wurde nun gefunden, daß die unerwünschte Nebenreaktion unterdrückt bzw. so weit verzögert werden kann, und somit genügend Zeit für die Neutralisation des Alkalihydroxyd-Katalysators zur Verfügung steht, wenn während der Endstoppungsreaktion im wesentlichen neutrale, in dem Reaktionsmedium ausreichend lösliche Alkalisalze vorhanden sind.

Gegenstand der vorliegenden Erfindung ist demnach ein Verfahren zur Herstellung von Triorganyloxysilyl- bzw. Diorganyloxysilyl-endgestoppten Poly(diorganosiloxanen) durch Umsetzung von $\alpha,\omega$-Dihydroxy(diorganosiloxanen) mit Tetraorganyloxysilanen oder Triorganyloxysilanen in Gegenwart von Alkalihydroxiden, Alkalialkoholaten und/oder Alkalisilanolaten in katalytisch wirksamen Mengen, das dadurch gekennzeichnet ist, daß die Umsetzung in Gegenwart von zusätzlich mindestens einem in dem Umsetzungssystem löslichen Alkalisalz durchgeführt wird.

Für die Umsetzung geeignet sind $\alpha,\omega$-Dihydroxypoly(diorganosiloxane) der allgemeinen Formel (I)

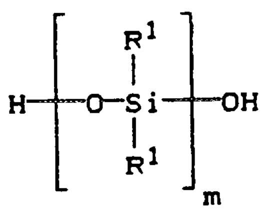

(I),

wobei

$R^1$ einen Methyl-, Vinyl-, Phenyl- oder 3,3,3-Trifluoropropylrest propylrest bezeichnet, wobei verschiedene $R^1$-Reste gleich oder verschieden sein können und

m eine solche Zahl bezeichnet, die einer Viskosität des Polymers (I) zwischen 0,01 und 1.000 Pa.s entspricht.

Als Organyloxysilane sind geeignet Verbindungen der allgemeinen Formel (II)

$$R^2_n\, Si\, (OR^3)_{4-n} \qquad (II),$$

wobei

$R^2$ einen gegebenenfalls substituierten Alkyl-, Alkenyl- oder Arylrest mit 1 bis 10 C-Atomen bezeichnet

$R^3$ einen gegebenenfalls substituierten aliphatischen oder cycloaliphatischen Kohlenwasserstoffrest mit 1 bis 6 C-Atomen bezeichnet und

n die Zahl 0 oder 1 bezeichnet.

Vorzugsweise steht $R^2$ für Methyl oder Vinyl und $R^3$ für Methyl oder Ethyl.

Das Organyloxysilan wird in Mengen von 1 bis 20, vorzugsweise 1 bis 10, besonders bevorzugt 1,5 bis 6 Mol pro OH-Äquivalent des Polymers I eingesetzt. Auch Mischungen tri- und tetrafunktioneller Organyloxysilane können eingesetzt werden.

Erfindungsgemäß werden als Katalysatoren Alkalihydroxyde der Formel MeOH oder Alkalialkoholate der Formel $MeOR^4$, oder Alkalisilanolate der Formel $MeO(SiR^5{}_2O)_pR^5$ eingesetzt, wobei

Me für Li, Na, K oder Cs, bevorzugt für Na oder K, steht,

$R^4$ bezeichnet einen gegebenenfalls substituierten linearen oder verzweigten Alkyl- oder Cycloalkylrest mit 1 bis 10 C-Atomen,

$R^5$ bezeichnet Methyl,

p bezeichnet eine Zahl zwischen 1 und 100, vorzugsweise 1 bis 20, besonders bevorzugt 1 bis 5.

Der Katalysator wird in solchen Konzentrationen eingesetzt, daß zwischen 0,5 und 1.000 ppm Alkaliionen, bezogen auf das Polymer I, in der Reaktionsmischung vorliegen. Konzentrationen zwischen 0,5 und 10 ppm sind ausreichend, wenn die Rohstoffe von sauren Bestandteilen frei sind. In der Praxis sind Konzentrationen zwischen 20 und 200 ppm Alkaliionen als Katalysatoren bevorzugt.

Bevorzugt wird der Katalysator mit etwas Alkohol als Lösungsmittel eingesetzt. Bevorzugt wird derselbe Alkohol eingesetzt, wie er sich bei der Umsetzungsreaktion bildet. Besonders bevorzugt ist aber Methanol, wiel bei Methanol die Gefahr von Verfärbungen beim Aufbewahren der Katalysatorsysteme gering ist. Die Menge des als Lösungsmittel eingesetzten Alkohols ist unkritisch. Im allgemeinen meinen sind Mengen zwischen 0,1 bis 0,3 Gew.-%, bezogen auf das Polymer I, ausreichend. Höhere Alkoholmengen sind unschädlich.

Erfindungsgemäß wird zur Verzögerung der unerwünschten Nebenreaktion als "Antikatalysator" ein Alkalimetallsalz eingesetzt. Geeignet sind Salze der Alkalimetalle mit

einer, gegebenenfalls substituierten, linearen, verzweigten oder cyclischen Alkylcarbonsäure oder einer Polycarbonsäure mit bis zu 30 C-Atomen oder

einer, gegebenenfalls substituierten, aromatischen Carbonsäure oder

einem Halbester der Kohlensäure der allgemeinen Formel $R^6$-O(CO)OMe oder

einer Aryl- oder Alkylsulfonsäure der Formel $R^7$-$SO_2$-OMe oder

einer Aryl- oder Alkylphosphonsäure der Formel $R^8$-PO-$(OMe)_2$,

wobei

$R^6$, $R^7$ oder $R^8$ einen aliphatischen oder aromatischen, gegebenenfalls substituierten Kohlenwasserstoffrest mit 1 bis 10 Kohlenstoffatomen und

Me eines der oben genannten Alkalimetallionen, vorzugsweise Na oder K, bezeichnet.

Der "Antikatalysator" wird vorzugsweise in Mengen von mindestens 1 Mol Antikatalysator zu 4 Mol Katalysator eingesetzt. Nach oben ist die Menge des Antikatalysators bezüglich der Umsetzungsreaktion nicht begrenzt. Jedoch sind übermäßige Mengen im Hinblick auf ihren Verbleib in dem Produkt unerwünscht, Vorzugsweise soll die Antikatalysatormenge 4 Mol pro Mol Katalysator nicht übersteigen. Besonders bevorzugt ist ein Verhältnis von Antikatalysator zu Katalysator von zwei : eins bis eins : zwei (molare Mengen).

Die Wirksamkeit von Alkaliionen in Bezug auf die Umlagerung von Polysiloxanen ist nicht auf die hier beschriebene Umsetzung beschränkt. Der erfindungsgemäße "Antikatalysator" ist daher generell zur Vermeidung unerwünschter Umlagerungsreaktionen von Polysiloxanen in Gegenwart von Alkoxysilanen aufgrund der Anwesenheit von Alkalimetallbasen wirksam.

Das erfindungsgemäße Katalysatorsystem, bestehend aus Katalysator und Antikatalysator kann der Reaktionsmischung in beliebiger Form zugesetzt werden. Zum Beispiel kann das OH-funktionelle Polyorganosiloxan zunächst mit dem Organyloxysilan vermischt werden und danach zunächst der Antikatalysator und dann der Katalysator zugegeben werden. Ebenfalls kann der Antikatalysator zunächst mit dem OH-funktionellen Polydiorganosiloxan vermischt werden und getrennt der Katalysator mit dem Organyloxysilan vermischt werden und danach beide Reaktionspartner vermischt werden.

Bevorzugt wird ein vorgemischtes Katalysatorsystem aus Katalysator, Alkohol, Antikatalysator und einem Teil des für die Umsetzung vorgesehenen Organyloxysilans.

Die Alkalisalze müssen in dem verwendeten Alkohol oder in einem Gemisch aus dem Alkohol und dem Organyloxysilan ausreichend löslich sein. Das Alkalimetall des Salzes kann verschieden von dem der Base sein. Bevorzugt ist jedoch die Verwendung des gleichen Metalls. Besonders bevorzugt sind Natrium oder Kalium. Welches der beiden Metalle verwendet wird, hängt von der Reaktionsfähigkeit des Alkoxysilans (II) ab. Für wenig reaktionsfähige Silane empfehlen sich Kalium- oder sogar Cäsiumverbindungen. Für die Funktionalisierung mit reaktionsfähigen Silanen, vor allem Methoxysilanen, ist der Einsatz von Natriumverbindungen bevorzugt.

Als Salze eignen sich beispielsweise Salze der Alkylcarbonsäuren, einschließlich der Ameisensäure. Bevorzugt sind Salze der Essigsäure oder der 2-Ethylhexansäure. Auch Salze aromatischer Carbonsäuren, wie der Benzoesäure oder der Methylbenzoesäuren sind geeignet. Salze von Polycarbonsäuren sind oft weniger löslich als Salze von Monocarbonsäuren. Günstig ist aber beispielsweise die Verwendung von Halbestersalzen, beispielsweise der Maleinsäure.

Für die Praxis kann die Verwendung von Halbestersalzen der Kohlensäure von besonderem Interesse sein. Ihre Bildung aus Alkalialkoholaten und Kohlendioxid wurde beschrieben (W. Behrendt, G. Gattow und M. Dräger, Zeitschrift für anorganische und allgemeine Chemie, 397 (1973) 237 bis 246). Es handelt sich um wasserempfindliche und thermisch labile Substanzen. Unter den Bedingungen der Raumtemperatur sind sie jedoch stabil. Bei der Neutralisation nach der Funktionalisierung zerfallen sie unter Bildung von Kohlendioxid und hinterlassen im System keine zusätzlichen Fremdanionen. Zur Herstellung einer solchen Katalysatorlösung teilt man zweckmäßigerweise eine Alkalialkoholatlösung in Alkohol und gegebenenfalls Alkoxysilan in zwei Hälften, leitet in die eine Hälfte $CO_2$ bis zur Sättigung ein und vereinigt die beiden Lösungen.

Weitere geeignete Salze sind Alkalisalze der Alkyl- oder Arylsulfonsäuren, bevorzugt Benzol- oder Toluolsulfonsäure. Auch Salze der Perfluoralkansulfonsäuren können verwendet werden.

Weitere geeignete Salze sind Alkalisalze von Phosphonsäuren, beispielsweise Alkalisalze der Methylphosphonsäure oder der Phenylphosphonsäure.

Die erfindungsgemäßen Katalysatorsysteme können Base und Salz in den molaren Verhältnissen zwischen 4:1 und 1:4 enthalten. Besonders bevorzugt ist ein Verhältnis zwischen 2:1 und 1:2. Für die Wahl des Verhältnisses ist jedoch die genaue Kenntnis der Zusammensetzung des Polymers (I) wichtig. Alle alkalischen oder sauren Spurenbestandteile des Polymers beeinflussen die erforderlichen Mengen und Mengenverhältnisse. Handelsübliche Polydimethylsiloxane enthalten beispielsweise saure Phosphate. Solche Phosphate, die vereinfachend beispielsweise mit $KH_2PO_4$ beschrieben werden können, verbrauchen Base, beispielsweise Alkalialkoholat, aus dem Katalysatorsystem. Das bedeutet, daß man die Menge an Alkalihydroxid oder Alkalialkoholat entsprechend erhöhen muß. Ähnliches gilt für saure Bestandteile des Alkoxysilans, beispielsweise synthesebedingte HCl-Rückstände. Die erfindungsgemäßen Katalysatorsysteme besitzen nicht nur den Vorteil, die unerwünschten Polymerumlagerungen zurückzudrängen, sondern sind auch in der Lage, Rohstoffschwankungen auszugleichen. Auf diese Weise wird ein gleichbleibender Verfahrensablauf gewährleistet, wenn sich die Konzentrationen saurer Spurenbestandteile in den eingesetzten Rohstoffen verändern.

Als Alkoxysilan setzt man bevorzugt die gleiche Verbindung ein, mit der das Polysiloxan (I) funktionalisiert werden soll.

Zur Herstellung der Katalysatorsysteme muß unter trockenem Schutzgas gearbeitet werden. Insbesondere der unkontrollierte Zutritt von Kohlendioxid ist zu vermeiden. Es ist besonders günstig, das feste Alkalihydroxid in einer Mischung aus Alkoxysilan und Alkohol aufzulösen und dann vorsichtig die dem Alkalisalz entsprechende freie Säure zuzudosieren.

Eine andere Art der Herstellung geht beispielsweise von einer methanolischen Natriummethylatlösung aus, zu der das Salz oder die freie Säure zugegeben wird. In diesem Fall kann auf eine Zugabe von Alkoxysilan verzichtet werden.

Zur Durchführung der Funktionalisierung kann man natürlich auch das Salz mit dem Polymer und dem Alkoxysilan und gegebenenfalls Alkohol vorlegen und die reine Basen- lösung zudosieren. Diese Verfahrensweise bringt jedoch

meist Löslichkeitsprobleme und ist schwieriger durchführbar.

Die erfindungsgemäßen Katalysatorsysteme besitzen den Vorteil, daß sie rasch den gewünschten Endstoppungsvorgang katalysieren. Die Endstoppungsreaktion kann also bei Raumtemperatur in kurzer Zeit durchgeführt werden. Die unerwünschte Polymerumlagerung wird jedoch im Vergleich zu reinen Alkalihydroxiden bzw. Alkalialkoholaten stark verzögert. Diese Verzögerung erleichtert die Verfahrensführung bei der Funktionalisierung, da eine große Zeitspanne für die Neutralisierung des basischen Katalysators zur Verfügung steht und die unerwünschten Nebenreaktionen auch bei sehr reaktionsfähigen Alkoxysilanen weitgehend vermieden werden können. Das Verfahren ermöglicht insbesondere die Herstellung von RTV 1 K-Massen aus OH funktionellen Polydimethylsiloxanen in einem Eintopfverfahren.

Die folgenden Beispiele sollen die Erfindung näher erläutern.

Wenn nicht anders angegeben, wurde für die Experimente ein OH terminiertes Polydimethylsiloxan der Viskosität 18 Pa.s verwendet, das mit Hilfe von säureaktivierter Bleicherde hergestellt worden war. Das auf diese Weise hergestellte Polysiloxan war frei von sauren oder alkalischen Spurenbestandteilen. Der Gehalt an reaktiven Gruppen betrug 0,006 Mol SiOH pro 100 g des Polymers. Die verwendeten Alkoxysilane enthielten weniger als 50 ppm hydrolysierbares Chlor.

## Beispiele

### Beispiel 1

Folgende Katalysatorlösungen wurden hergestellt:

Lösung A:
Unter trockenem Argon wurden 0,6 g festes Natriummethylat in 38 g wasserfreiem Methanol gelöst und in die Lösung bei 23°C gasförmiges $CO_2$ bis zur Sättigung eingeleitet. Das $CO_2$ wurde zuvor getrocknet.

Lösung B:
Unter trockenem Argon wurden 0,6 g festes Natriummethylat in 38 g wasserfreiem Methanol gelöst.

Lösung C (Katalysatorsystem):
10 g der Lösung A wurden mit 10 g der Lösung B unter trockenem Argon vereinigt.

Zu 500 g eines OH endgestoppten Polydimethylsiloxans der Viskosität 18 Pa.s wurden unter trockenem Stickstoff 25 g Methyltrimethoxysilan gegeben. Unter Rühren wurden bei 23°C 0,84 g der Lösung C (Katalysatorsystem) zugesetzt.

Über einen Zeitraum von ca. 60 Minuten wurde der Viskositätsverlauf in der Mischung bestimmt (Tabelle 1).

Trotz des hohen Überschusses an Alkoxysilan veränderte sich die Viskosität der Mischung über einen Zeitraum von 10 Minuten nicht. Das bedeutet, daß keine Veränderung des Polymergerüstes stattfand.

Der Versuch wurde wiederholt und nach 10 minütiger Reaktionszeit folgender Test auf SiOH Gruppen durchgeführt:

100 Gew.-Teile der zu prüfenden Mischung wurden mit 5 Gew.-Teilen einer Testlösung versetzt. Diese Lösung war unter Ausschluß von Luftfeuchtigkeit durch Auflösen von 20 % Dibutylzinnoxid in Tetraethoxysilan bei 100°C hergestellt worden. Tritt nach der Zugabe der Testlösung ein rascher Viskositätsanstieg bis hin zur Vergelung ein, ist dies als Hinweis auf eine unvollständige Absättigung der SiOH Gruppen des OH-endgestoppten Polysiloxans zu interpretieren.

Es trat keine merkliche Vergelung ein. Die gewünschte Endstoppungsreaktion war demnach erfolgt.

### Vergleichsbeispiel 1a

Beispiel 1 wurde anstatt mit Lösung C mit 0,42 g der Lösung B wiederholt. Der Viskositätsverlauf ist der Tabelle 1 zu entnehmen.

Aus dem Viskositätsverlauf geht hervor, daß bereits nach 10 minütiger Reaktionszeit die Viskosität merklich abgenommen hat. Das bedeutet, daß das Polymergerüst bereits durch Umlagerungsreaktionen angegriffen wurde.

### Vergleichsbeispiel 1b

Beispiel 1 wurde anstatt mit Lösung C mit 0,42 g der Lösung A wiederholt (Tabelle 1). Die Viskosität veränderte sich über den gesamten Beobachtungszeitraum von einer Stunde nicht. Der Test auf SiOH Gruppen nach 10 minütiger Reaktionszeit verlief positiv. Das bedeutet, daß noch substantielle Mengen SiOH vorlagen.

Tabelle 1

| Die Viskositätsangaben erfolgen in Skalenteilen der Meßeinrichtung. | | | |
|---|---|---|---|
| Zeit [Minuten] | relative Viskosität [Skalenteile] | | |
| | Versuch 1 | Vergleich 1a | Vergleich 1b |
| 0 | 17,5 | 17,5 | 17,5 |
| 10 | 17,5 | 13,5 | 17,5 |
| 16 | 16,5 | 11,5 | 17,5 |
| 21 | 15,5 | - | 17,5 |
| 27 | - | 9,5 | - |
| 30 | - | 8,5 | 17,5 |
| 33 | - | 8,0 | - |
| 39 | 13,5 | - | - |
| 47 | 12,5 | - | 17,5 |
| 62 | - | 4,5 | - |
| 78 | 9,5 | - | 17,5 |

Beispiel 2

10 g 2-Ethylhexansäure wurden in 90 g trockenem Methanol gelost. 0,42 g dieser Lösung wurden mit 2 g der Lösung B aus Beispiel 1 vereinigt und ergaben Lösung D.

10 g Natriumacetat wurden in 90 g trockenem Methanol gelöst. 0,24 g dieser Lösung wurden mit 1 g der Lösung B aus Beispiel 1 vereinigt und ergaben Lösung E.

10 g p-Toluolsulfonsäure wurden in 90 g trockenem Methanol gelöst. 0,22 g dieser Lösung wurden mit 2 g einer Lösung von 0,68 g Natriummethylat in 100 g trockenem Methanol vereinigt und ergaben Lösung F.

Versuch 1 wurde unter Verwendung der Lösung D bis F anstatt Lösung C durchgeführt. Tabelle 2 zeigt den Viskositätsverlauf in Abhängigkeit von der Reaktionszeit und die eingesetzten Mengen der Katalysator Systeme.

Der Vergelungstest ergab in allen drei Fällen nach 10 minütiger Reaktionszeit keinen merklichen Viskositätsanstieg. Das bedeutet, daß die Endstoppungsreaktion im wesentlichen erfolgt war.

Tabelle 2

| Die Viskositätsangaben erfolgen in Skalenteilen der Meßeinrichtung. | | | |
|---|---|---|---|
| Zeit [Minuten] | relative Viskosität [Skalenteile] | | |
| | Lösung D | Lösung E | Lösung F |
| 0 | 18,5 | 17,5 | 17,5 |
| 6 | - | 17,5 | - |
| 7 | 19,0 | - | - |
| 8 | - | - | 17,5 |
| 11 | - | - | 17,0 |
| 15 | - | - | 16,5 |
| 16 | 18,5 | - | - |
| 22 | - | - | 15,5 |
| 27 | - | 16,0 | 15,5 |
| 30 | - | - | 14,5 |
| 33 | - | 15,5 | - |
| 43 | - | - | 14,5 |
| 48 | - | 14,5 | - |
| 61 | 15,0 | - | - |
| 79 | - | - | 11,5 |
| 108 | 14,5 | - | - |

Fortsetzung der Tabelle auf der nächsten Seite

Tabelle 2 (fortgesetzt)

| Die Viskositätsangaben erfolgen in Skalenteilen der Meßeinrichtung. | | | |
|---|---|---|---|
| Zeit [Minuten] | relative Viskosität [Skalenteile] | | |
| | Lösung D | Lösung E | Lösung F |
| 110 | - | 12,0 | - |
| Einsatzmengen der Katalysatorsysteme | 1,0 g | 0,51 g | 2,2 g |

## Patentansprüche

1. Verfahren zur Herstellung von Triorganyloxysilyl- bzw. Organodiorganyloxysilyl-endgestoppten Poly(diorganosiloxan) durch Umsetzung von α,ω-Dihydroxypoly(diorganosiloxan) mit Tetraorganyloxysilan oder Organotriorganyloxysilan in Gegenwart von Alkalihydroxiden, Alkalialkoholaten und/oder Alkalisilanolaten in katalytisch wirksamen Mengen, dadurch gekennzeichnet, daß die Umsetzung in Gegenwart von zusätzlich mindestens einem Alkalimetallsalz, das aus einem Alkalimetall und einer, gegebenenfalls substituierten, linearen, verzweigten oder cyclischen Alkylcarbonsäure oder einer Polycarbonsäure mit bis zu 30 C-Atomen oder

   einer, gegebenenfalls substituierten, aromatischen Carbonsäure oder

   einem Halbester der Kohlensäure der allgemeinen Formel $R^6$-O(CO)OMe oder

   einer Aryl- oder Alkylsulfonsäure der Formel $R^7$-$SO_2$-OMe oder

   einer Aryl- oder Alkylphasphonsäure der Formel $R^8$-PO-$(OMe)_2$,

   wobei

   $R^6$, $R^7$ oder $R^8$ einen aliphatischen oder aromatischen, gegebenenfalls substituierten Kohlenwasserstoffrest mit 1 bis 10 Kohlenstoffatomen und

   Me eines der oben genannten Alkalimetallionen bezeichnet, besteht,

   durchgeführt wird.

2. Katalysatorsystem für die Umsetzung von α,ω-Dihydroxypoly(diorganosiloxan) mit Organo-Tri- oder Tetraorganyloxysilan, enthaltend als Katalysator Alkalihydroxide, Alkalialkoholate undloder Alkalisilanolate und mindestens ein Alkalimetallsalz, das aus einem Alkalimetall mit einer, gegebenenfalls substituierten, linearen, verzweigten oder cyclischen Alkylcarbonsäure oder einer Polycarbonsäure mit bis zu 30 C-Atomen oder

   einer, gegebenenfalls substituierten, aromatischen Carbonsäure oder

   einem Halbester der Kohlensäure der allgemeinen Formel $R^6$-O(CO)OMe oder

   einer Aryl- oder Alkylsulfonsäure der Formel $R^7$-$SO_2$-OMe oder

   einer Aryl- oder Alkylphosphonsäure der Formel $R^8$-PO-$(OMe)_2$,

   wobei

   $R^6$, $R^7$ oder $R^8$ einen aliphatischen oder aromatischen, gegebenenfalls substituierten Kohlenwasserstoffrest mit 1 bis 10 Kohlenstoffatomen und

   Me eines der oben genannten Alkalimetallionen bezeichnet, besteht.

3. Verwendung von Alkalimetallsalzen, die aus einem Alkalimetall und einer, gegebenenfalls substituierten, linearen,

verzweigten oder cyclischen Alkylcarbonsäure oder einer Polycarbonsäure mit bis zu 30 C-Atomen oder

einer, gegebenenfalls substituierten, aromatischen Carbonsäure oder

einem Halbester der Kohlensäure der allgemeinen Formel $R^6$-O(CO)OMe oder

einer Aryl- oder Alkylsulfonsäure der Formel $R^7$-$SO_2$-OMe oder

einer Aryl- oder Alkylphosphonsäure der Formel $R^8$-PO-$(OMe)_2$,

wobei

$R^6$, $R^7$ oder $R^8$ einen aliphatischen oder aromatischen, gegebenenfalls substituierten Kohlenwasserstoffrest mit 1 bis 10 Kohlenstoffatomen und

Me eines der oben genannten Alkalimetallionen bezeichnet, bestehen,

bei der Umlagerung von Organopolysiloxanen in Gegenwart von Organyloxysilanen und Alkalimetallbasen.

## Claims

1. Process for the production of triorganyloxysilyl or organodiorganyloxysilyl end-terminated poly(diorganosiloxane) by the reaction of α,ω-dihydroxypoly(diorganosiloxane) with tetraorganyloxysilane or organotriorganyloxysilane in the presence of alkali hydroxides, alkali alkoxides and/or alkali silanolates in catalytically active quantities, characterised in that the reaction is performed in the presence of additionally at least one alkali metal salt consisting of an alkali metal and an optionally substituted, linear, branched or cyclic alkylcarboxylic acid or a polycarboxylic acid with up to 30 C atoms or

   an optionally substituted aromatic carboxylic acid or

   a carbon acid semi-ester of the general formula $R^6$-O(CO)OMe or

   an aryl- or alkylsulphonic acid of the formula $R^7$-$SO_2$-OMe or

   an aryl- or alkylphosphonic acid of the formula $R^8$-PO-$(OMe)_2$,

   wherein

   $R^6$, $R^7$ or $R^8$ denote an aliphatic or aromatic, optionally substituted hydrocarbon residue with 1 to 10 carbon atoms and

   Me denotes one of the above-stated alkali metal ions.

2. Catalyst system for the reaction of α,ω-dihydroxypoly(diorganosiloxane) with organo-tri- or tetraorganyloxysilane, containing as the catalyst alkali hydroxides, alkali alkoxides and/or alkali silanolates and at least one alkali metal salt consisting of an alkali metal and an optionally substituted, linear, branched or cyclic alkylcarboxylic acid or a polycarboxylic acid with up to 30 C atoms or

   an optionally substituted aromatic carboxylic acid or

   a carbonic acid semi-ester of the general formula $R^6$-O(CO)OMe or

   an aryl- or alkylsulphonic acid of the formula $R^7$-$SO_2$-OMe or

   an aryl- or alkylphosphonic acid of the formula $R^8$-PO-$(OMe)_2$,

   wherein

$R^6$, $R^7$ or $R^8$ denote an aliphatic or aromatic, optionally substituted hydrocarbon residue with 1 to 10 carbon atoms and

Me denotes one of the above-stated alkali metal ions.

**3.** Use of alkali metal salts consisting of an alkali metal and an optionally substituted, linear, branched or cyclic alkylcarboxylic acid or a polycarboxylic acid with up to 30 C atoms or

an optionally substituted aromatic carboxylic acid or

a carbon acid semi-ester of the general formula $R^6$-O(CO)OMe or

an aryl- or alkylsulphonic acid of the formula $R^7$-$SO_2$-OMe or

an aryl- or alkylphosphonic acid of the formula $R^8$-PO-$(OMe)_2$,

wherein

$R^6$, $R^7$ or $R^8$ denote an aliphatic or aromatic, optionally substituted hydrocarbon residue with 1 to 10 carbon atoms and

Me denotes one of the above-stated alkali metal ions,

in the rearrangement of organopolysiloxanes in the presence of organyloxysilanes and alkali metal bases.

## Revendications

**1.** Procédé pour la préparation d'un poly(diorganosiloxane) à groupes terminaux triorganyloxysilyle ou organodiorganyloxysilyle par réaction d'un $\alpha,\omega$-dihydroxypoly(diorganosiloxane) avéc un tétraorganyloxysilane ou un organotriorganyloxysilane en présence d'hydroxydes alcalins, d'alcoolates alcalins et/ou de silanolates alcalins en quantités catalytiques efficaces, caractérisé en ce que la réaction est réalisée en présence en outre d'au moins un sel de métal alcalin consistant en un métal alcalin et un acide alkylcarboxylique linéaire, ramifié ou cyclique éventuellement substitué ou un acide polycarboxylique contenant jusqu'à 30 atomes de carbone, ou bien

un acide carboxylique aromatique éventuellement substitué, ou bien un hémiester de l'acide carbonique, de formule générale $R^6$–O(CO)OMe ou bien un acide aryl- ou alkyl-sulfonique, de formule $R^7$-$SO_2$-OMe, ou bien un acide aryl- ou alkyl-phosphonique, de formule $R^8$-PO-$(OMe)_2$,

$R^6$,$R^7$ et $R^8$ représentant chacun un radical hydrocarboné aliphatique ou aromatique éventuellement substitué contenant 1 à 10 atomes de carbone, et
Me représente l'un des ions de métaux alcalins dont il a été question ci-dessus.

**2.** Système catalyseur pour la réaction d'un $\alpha,\omega$-dihydroxypoly(diorganosiloxane) avec un organo-tri- ou -tétra-organyloxysilane, contenant en tant que catalyseur un hydroxyde alcalin, un alcoolate alcalin et/ou un silanolate alcalin, et au moins un sel de métal alcalin consistant en un métal alcalin et un acide alkylcarboxylique linéaire, ramifié ou cyclique éventuellement substitué ou un acide polycarboxylique contenant jusqu'à 30 atomes de carbone, ou bien

un acide carboxylique aromatique éventuellement substitué, ou bien un hémiester de l'acide carbonique, de formule générale $R^6$-O(CO)OMe, ou bien un acide aryl- ou alkyl-sulfonique, de formule $R^7$-$SO_2$-OMe ou bien un acide aryl- ou alkyl-phosphonique, de formule $R^8$-PO-$(OMe)_2$,

$R^6$, $R^7$ et $R^8$ représentant chacun un radical hydrocarboné aliphatique ou aromatique éventuellement substitué contenant 1 à 10 atomes de carbone, et
Me l'un des ions de métaux alcalins dont il a été question ci-dessus.

**3.** Utilisation de sels de métaux alcalins consistant en un métal alcalin et un acide alkylcarboxylique linéaire, ramifié ou cyclique éventuellement substitué ou un acide polycarboxylique contenant jusqu'à 30 atomes de carbone, ou bien

un acide carboxylique aromatique éventuellement substitué, ou bien un hémiester de l'acide carbonique, de formule générale $R^6$-O(CO)OMe ou bien un acide aryl- ou alkyl-sulfonique, de formule $R^7$-$SO_2$-OMe ou bien un acide aryl- ou alkyl-phosphonique, de formule $R^8$-PO-$(OMe)_2$,

| | |
|---|---|
| $R^6$, $R^7$ et $R^8$ | représentant chacun un radical hydrocarboné aliphatique ou aromatique éventuellement substitué contenant 1 à 10 atomes de carbone, et |
| Me | l'un des ions de métaux alcalins dont il a été question ci-dessus, |

à la transposition d'organopolysiloxanes en présence d'organyloxysilanes et de bases de métaux alcalins.